# Europäisches Patentamt

# European Patent Office

# Office européen des brevets

(11) Numéro de publication: **0 131 478**
**B1**

(12) **FASCICULE DE BREVET EUROPÉEN**

(45) Date de publication du fascicule du brevet:
**02.09.87**

(21) Numéro de dépôt: **84401023.1**

(22) Date de dépôt: **18.05.84**

(51) Int. Cl.⁴: **G 01 T 1/164**

(54) **Procédé de traitement des impulsions de localisation délivrées par une gamma caméra et gamma caméra mettant en oeuvre ce procédé.**

(30) Priorité: **27.05.83 FR 8308825**

(43) Date de publication de la demande:
**16.01.85 Bulletin 85/3**

(45) Mention de la délivrance du brevet:
**02.09.87 Bulletin 87/36**

(84) Etats contractants désignés:
**DE NL**

(56) Documents cité:
**GB-A-1 225 058**
**US-A-3 953 735**
**US-A-4 058 728**

(73) Titulaire: **SOPHA MEDICAL Société Nouvelle Informatek,, Z.A. de Courtaboeuf Avenue de Scandinavie, 91940 - Les Ulis (FR)**

(72) Inventeur: **Roux, Georges, THOMSON- CSF SCPI 173, bld. Haussmann, F-75379 Paris Cedex 08 (FR)**
Inventeur: **Mestais, Corinne, THOMSON- CSF SCPI 173, bld. Haussmann, F-75379 Paris Cedex 08 (FR)**
Inventeur: **Gauthier, René, THOMSON- CSF SCPI 173, bld. Haussmann, F-75379 Paris Cedex 08 (FR)**

(74) Mandataire: **Grynwald, Albert, THOMSON- CSF SCPI 19, avenue de Messine, F-75008 Paris (FR)**

## Description

L'invention concerne un procédé de traitement des impulsions de localisation délivrées par une gamma-caméra et une gamma-caméra mettant en oeuvre ce procédé. Elle se rapporte aux caméras à scintillation, ou gamma-caméra, de type ANGER dont le brevet américain US-A- 3 011 057 décrit le fonctionnement dans ses principes et ses moyens de réalisation. Ces gamma-caméras sont destinées à détecter et à visualiser des photons émis par des corps radioactifs.

Les gamma-caméras sont utilisées en médecine nucléaire pour visualiser dans un organe la répartition de molécules marquées par un isotope radioactif que l'on a injecté à un patient. Une gamma-caméra comprend généralement un collimateur pour focaliser les photons gamma émis par le patient, un cristal scintillateur pour transformer les photons gamma en photons lumineux ou scintillations, et un réseau de tubes photomultiplicateurs qui transforment chacun les scintillations en des impulsions électriques dites contributions électriques de tubes. Il comporte en outre des circuits électroniques pour produire à partir des contributions électriques fournies par les tubes photomultiplicateurs, des signaux de coordonnées X et Y du lieu où s'est produite la scintillation ainsi qu'un signal de validation Z quand l'énergie W de la scintillation appartient à une bande d'énergie prédéterminée.

Cette chaîne de détection est suivie d'un ensemble de visualisation comportant généralement un oscilloscope cathodique commandé par les signaux de coordonnées X, Y, et par Z pour visualiser par un point lumineux sur l'écran le point d'impact du photon gamma sur le cristal. L'ensemble de visualisation peut éventuellement comporter un dispositif photographique pour former une image de l'organe observé en intégrant un grand nombre de points lumineux produits sur l'écran cathodique. Il peut par ailleurs comprendre un dispositif de traitement numérique des images.

Entre autres qualités une gamma-caméra doit posséder une bonne résolution spatiale c'est-à-dire la capacité de distinguer des petites sources radioactives rapprochées, une bonne réponse en taux de comptage, c'est-à-dire la capacité de traiter un grand nombre d'événements par unité de temps, et une qualité d'image indépendante de l'énergie de l'isotope considéré.

La résolution spatiale dépend de la précision du calcul des coordonnées X et Y. La qualité de l'élaboration de ces coordonnées dépend essentiellement des lois physiques régissant le fonctionnement des différentes parties de la gamma-caméra. Ainsi, l'interaction d'un photon gamma avec le cristal donne naissance à une scintillation lumineuse dont l'intensité décroît exponentiellement avec le temps. La constante de temps de cette décroissance est caractéristique du cristal cintillateur utilisé; pour un cristal d'iodure de sodium activé au thallium, Nal(Tl), elle est de l'ordre de 250 nanosecondes. Cette scintillation est vue par plusieurs tubes photomultiplicateurs simultanément. Les photons lumineux composant cette scintillation arrachent des photoélectrons aux photocathodes des tubes photomultiplicateurs; le nombre de photoélectrons arrachés obéit, pour une scintillation donnée, à la loi statistique de Poisson. Ceci signifie que la contribution électrique d'un tube photomultiplicateur recevant une scintillation a une amplitude dont la valeur suit une distribution statistique de Poisson et dont la valeur moyenne est fonction de l'énergie des photons lumineux incidents. Par ailleurs, à énergie costante, cette contribution électrique est une fonction, sensiblement gaussienne, de la distance séparant le centre de ce tube photomultiplicateur du lieu où s'est produit la scintillation. Si la scintillation se produit à l'aplomb du centre de ce tube, la contribution électrique est maximale; plus le lieu de la scintillation est éloignée du centre du tube plus la contribution électrique est faible. A titre d'exemple, si une scintillation se produit à l'aplomb d'une paroi du tube, la contribution électrique de celui-ci est environ réduite de moitié par rapport à la contribution électrique maximale.

Une scintillation est vue par plusieurs tubes photomultiplicateurs simultanément, généralement 6 à 10 tubes. Aussi la détermination de l'emplacement de cette scintillation sur le cristal, elle-même représentative du lieu d'émission du photon gamma d'excitation, peut être obtenue en calculant l'emplacement du barycentre des contributions électriques délivrées par l'ensemble des tubes photomultiplicateurs excités par cette seintillation. Ce calcul s'effectue simplement, selon ANGER, en injectant les contributions électriques à travers un jeu de matrices de résistances dont les valeurs des résistances sont fonction des positions des tubes photomultiplicateurs auxquels elles sont raccordées. Les positions de ces tubes sont repérées par rapport à des axes cartésiens de référence dont le point d'intersection est généralement situé au centre du réseau de tubes. Le jeu de matrices comporte généralement cinq matrices: quatre matrices servant à la localisation et une matrice servant à la mesure de l'énergie. Dans chaque matrice, il y a autant de résistances qu'il y a de tubes photomultiplicateurs dans le réseau de tubes. Chacune des résistances est reliée d'une part à la sortie d'un tube photomultiplicateur différent et d'autre part à un point commun qui constitue la sortie de la matrice. Ces résistances effectuent ainsi une pondération des contributions électriques de chacun des tubes photomultiplicateurs qui les alimentent.

Un problème difficile à résoudre consiste pour une scintillation donnée à déterminer le plus exactement possible la valeur moyenne des amplitudes de chacune des contributions électriques. Il est connu d'intégrer dans le temps ces contributions sur une période de l'ordre de la constante de temps de décroissance des scintillations du cristal scintillateur. Typiquement la durée de cette intégration est de l'ordre de trois fois la constante de temps. La durée d'intégration nécessaire est une conséquence directe de la statistique de Poisson. En effet, l'écart type de la fluctuation de l'amplitude des cotributions électriques selon la statistique de Poisson est inversement proportionnelle à la racine carrée du nombre de photoélectrons arrachés. Ainsi, plus l'intégration est longue, plus le nombre de photoélectrons pris en compte est important et plus l'écart

2

type est faible et donc plus la valeur moyenne de cette contribution est appréciée avec exactitude. En fait l'opération de calcul de l'emplacement du barycentre étant une opération linéaire il est plus économique de réaliser cette intégration à la sortie de chacune des matrices de résistances du jeu de matrices. En effet, ces matrices n'effectuent qu'une pondération des contributions de chaque tube en fonction de l'emplacement du tube sur le cristal. Les impulsions électriques délivrées en sortie des matrices du jeu de matrices de résistances sont dites impulsions pondérées. On notera au passage que la durée d'intégration est ainsi directement liée à la qualité de la résolution spatiale de la gamma-caméra mais que cette qualité s'obtient au détriment du taux de comptage, c'est-à-dire au détriment du nombre d'événements par seconde pris en compte.

Cette opération d'intégration ne va pas sans quelques difficultés. La principale de celles-ci réside dans la présence de tensions continues permanentes venant se superposer aux impulsions pondérées délivrées par les matrices et qui, introduites dans des intégrateurs faussent d'autant plus la valeur du signal délivré par ceux-ci que la durée d'intégration est longue. L'origine de ces tensions continues est principalement le fait d'amplificateurs à gain variable interposés entre chaque matrice de résistance et un intégrateur correspondant. Ces amplificateurs à gain variable sont utilisés pour effectuer une adaptation d'amplitude des impulsions pondérées à la dynamique de fonctionnement des intégrateurs utilisés, et en conséquence choisir une gamme d'énergie à étudier. Ces tensions continues à éliminer peuvent avoir d'autres origines notamment celle résultant d'un effet dit d'empilement des scintillations. Dans une demande de brevet déposé le même jour, la demanderesse présente un dispositif permettant d'éliminer du signal utile ces tensions continues.

Par l'opération d'intégration les impulsions pondérées, notées $x^+$ $x^-$, $y^+$ et $y^-$, délivrées par les matrices de localisation sont transformées en impulsions dites de localisation notées généralement $X^+$, $X^-$, $T^+$ et $Y^{-1}$. Ces impulsions de localisation sont introduites dans un circuit de calcul qui délivre les signaux de coordonnées X et Y. Les signaux X et Y sont proportionnels respectivement à $(X^+ - X^-)$ et à $(Y^+ - Y^-)$. Or les amplitudes des impulsions de localisation sont tributaires de l'énergie W de la scintillation qui leur a donné naissance. Il est connu dans l'état de la technique de s'affranchir de cette énergie en effectuant dans le circuit de calcul une normalisation de X et Y de la forme:

$$X = \frac{X^+ - X^-}{W} \text{ et } Y = \frac{Y^+ - Y^-}{W}$$

Ce procédé, tout en donnant des résultats appréciables présente certains inconvénients.

En effet, l'énergie W est obtenue par intégration comme pour les impulsions de localisation $X^+$, $X^-$, $Y^+$ et $Y^-$, à partir d'une impulsion pondérée $\underline{w}$ délivrée par une matrice, dite énergie, du jeu de matrices. Dans la matrice énergie toutes les résistances de pondération sont pratiquement égales. Elles sont ajustabels en usine, d'une tube photomultiplicateur à l'autre, pour que la réponse en énergie soit la même sous chaque tube quelle que soit la position de ce tube sur le cristal. Il en résulte que pour des scintillations, toutes d'énergie égale, mais survenant en des endroits quelconque sur le scintillateur, l'énergie W sera la même. Il faut cependant nuancer cette affirmation par le fait que pour chaque scintillation c'est la valeur moyenne des différents W et la variance de W qui sont les mêmes puisque les tubes photomultiplicateurs effectuent des détections selon la statistique de Poisson. Par contre, dans les matrices servant à la localisation, c'est-à-dire délivrant les impulsions pondérées $x^+$, $x^-$, $y^+$ et $y^-$, les résistances varient en fonction de la position des tubes photomultiplicateurs sur le cristal. Par exemple, si l'on appelle $x_i$ l'abscisse d'un tube par rapport aux axes cartésiens de référence, les résistances de la matrice délivrant $x^+$ ont des valeurs égales à:

$$\frac{R_o}{\dfrac{2x_i}{D} + 1}$$

où $R_o$ est une résistance caractéristique, choisie en fonction de l'impédance de sortie des matrices et où D est la longueur de la médiane du réseau de tubes. Les résistances de la matrice délivrant $x^-$ ont des valeurs égales à:

$$\frac{R_o}{1 - \dfrac{2x_i}{D}}$$

des valeurs similaires sont attribuées aux résistances des matrices délivrant $y^+$ et $y^-$ en fonction de l'ordonnée $y_i$ du tube photomultiplicateur considéré. Ces résistances de pondération suivent donc des fonctions hyperboliques. En conséquence, la variance des impulsions de localisation $X^+$, $X^-$, $Y^+$ et $Y^-$ est dépendante de l'endroit où s'est produit la scintillation puisqu'alors les résistances des matrices de localisation effectuent justement des pondérations différentes en fonction de cet endroit sur les contributions électriques correspondantes. Comme la variance de W est constante, la normalisation de X ou Y par W est donc faussée.

Par ailleurs, il est connu dans les matrices de localisation de placer des éléments non-linéaires en série avec chacune des résistances entre la sortie de ces résistances et la sortie de la matrice. Ces éléments non linéaires ont pour but d'éliminer les contributions électriques trop faibles c'est-à-dire dont le niveau est du même ordre que des bruits de scintillation et de détection. De tels éléments non linéaires n'existent pas dans la matrice d'énergie. En conséquence, en normalisant X et Y comme vu plus haut, on normalise par une fonction W, linéaire de l'énergie de scintillation, des signaux $(X+ - X-)$ ou $(Y+ - Y-)$ qui ne sont pas rigoureusement proportionnels à cette énergie de scintillation. Ceci est donc une autre cause d'erreur sur le calcul dc X et Y.

Une autre manière de normaliser, décrete notamment dans les documents GB-A- 1 225 058 et US-A- 4 058 728 a consisté à prendre en compte la somme des impulsions de localisation. Dans ce cas, on effectue:

$$X = \frac{X^+ - X^-}{X^+ + X^- + Y^+ + Y^-} \text{ et } Y = \frac{Y^+ - Y^-}{X^+ + X^- + Y^+ + Y^-}$$

Comme le prouvent les résultats expérimentaux, cette solution n'est pas bonne. En effet, pour des scintillations se produisant toutes à une même ordonnée $(y_i)$, la somme des impulsions de localisation $(X+ + X-)$ n'est pas constante et donc les valeurs de Y qui résultent de la deuxième formule sont différentes alors que justement elles devraient être égales puisqu'elles concernent des scintillations de même ordonnée.

La présente invention propose de résoudre les inconvénients cités en normalisant les signaux de coordonnées X, Y par un signal qui n'est que le résultat d'une combinaison des impulsions de localisation ayant servi respectivement à l'élaboration de X ou Y.

L'invention concerne un procédé de traitement des impulsions de localisation délivrées par une gamma-caméra dans laquelle:
- des scintillations produites sous l'effet dun rayonnement gamma dans un cristal scintillateur sont détectées, amplifiées, et transformées en contributions électriques par un réseau de tubes photomultiplicateurs;
- lesdites contributions sont pondérées dans des matrices de résistances pour produire des impulsions pondérées relatives à un système d'axes de référence;
- lesdites impulsions pondérées sont ensuite sommées et intégrées dans un étage d'intégrateurs pour produire lesdites impulsions de localisation;
- lesdites impulsions de localisation sont transformées et normalisées par un circuit de calcul en signaux électriques représentatifs des coordonnées cartésiennes des emplacements des scintillations sur le cristal;
- caractérisé en ce que l'on effectur dans le circuit de calcul normalisation des signaux de coordonnées en divisant la soustraction de deux impulsions de localisation selon un axe de coordonnée par la sommc des mêmes impulsions de localisation selon cet axe, la même opération étant effectuée pour chaque axe de reférence.

L'invention a également pour objet une gamma-caméra munie d'un dispositif de traitement des impulsions de localisation comportant un collimateur pour collimater sur un cristal scintillateur un rayonnement gamma a mesurer, un réseau de tubes photomultiplicateurs pour détecter les scintillations émises par le scintillateur et pour amplifier les contributions électriques résultant de ces détections, un jeu de matrices de résistances pour pondérer et sommer les contributions électriques et produire ainsi des impulsions pondérées relatives à un système d'axes de référence, un étage d'intégrateurs pour sommer et intégrer les impulsions pondérées et produire des impulsions de localiation et un circuit de calcul pour transformer les impulsions de localisation en signaux électriques représentatifs des coordonnées cartésiennes des emplacements des scintillations sur le cristal, caractérisé en ce que le circuit de calcul comporte des moyens pour effectuer une normalisation des signaux de coordonnées en divisant la soustraction de deux impulsions de localisation selon un axe de référence par la somme des mêmes impulsions de localisation selon cet axe.

L'invention sera mieux comprise à la lecture de la description qui suit et à l'examen des figures qui l'accompagnent. Sur ces figures les mêmes repères désignent les mêmes éléments. Ces figures représentent:
- figure 1, un schéma bloc d'une gamma-caméra muni des moyens de normalisation selon l'invention,
- figure 2, une vue en coupe dun réseau de tube photomultiplicateurs,
- figure 3, un schéma bloc du circuit de calcul de l'invention.

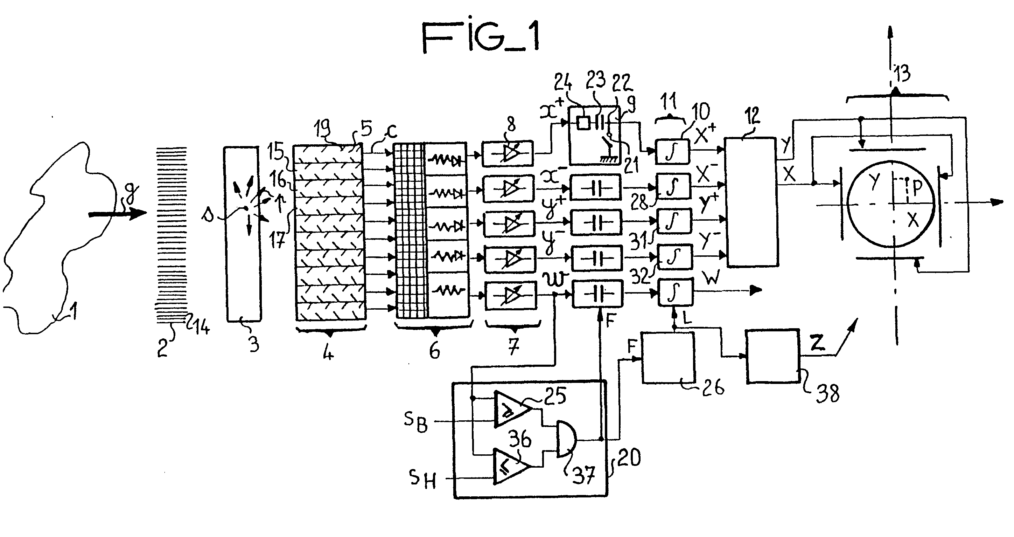

Sur la figure 1 on distingue le schéma général d'une gamma-caméra dans laquelle les rayons gamma g émis par un corps radioactif 1 sont focalisés par un collimateur 2 sur un scintillateur 3. Le rayonnement gamma g émis provoque une scintillation s dont les photons lumineux p viennent attaquer les photocathodes d'un réseau 4 de tubes photomultiplicateurs 5. Des contributions électriques c détectées par les tubes 5 sont introduites à l'entrée d'un jeu 6 de matrices de résistances. Le jeu 6 de matrices de résistances comporte ici cinq matrices délivrant simultanément et respectivement des impulsions pondérées x+, x-, y+, y- et w. Ces impulsions pondérées sont remises en forme par un étage 7 d'amplificateurs à gains variables tels que 8. Ces impulsions pondérés sont alors couplées capacitivement chacune par un circuit de restauration de potentiel de base tel que 9 à l'intégrateur correspondant 10 de l'étage intégrateur 11. Les impulsions de localisation X+, X-, Y+, Y-, delivrées par l'étage 11, sont alors introduites dans un circuit de calcul 12. Le circuit 12 délivre en sortie les signaux de coordonnées X et Y devant servir à la visualisation d'un point lumineux P sur l'écran d'un oscilloscope 13 La position du point P par rapport à l'axe d'abscice et à l'axe d'ordonnée figurant sur cet écran est représentative du lieu de la scintillation s sur le scintillateur 3 et donc du lieu d'émission du rayonnement gamma g dans le corps radioactif 1.

Dans un exemple, le collimateur 2 est une plaque en plomb épaisse de plusieurs centimètres, percée d'une pluralité de trous 14 orientés perpendiculairement à sa surface pour ne laisser passer du rayonnement gamma incident que les photons se propageant perpendiculairement à cette surface. Il est courant que le corps radioactif émette selon sa nature des photons gamma d'énergie différente par exemple des rayons gamma d'énergie 80 kev, 122 kev, ou 360 kev. Le cristal 3 dans un exemple est à base d'iodure de sodium activé au thallium comme vu précédemment. Les photons lumineux p viennent exciter les photocathodes des tubes photomultiplicateurs 15, 16, 17, 18 qui sont disposés en regard de l'endroit où s'est produite la scintillation s.

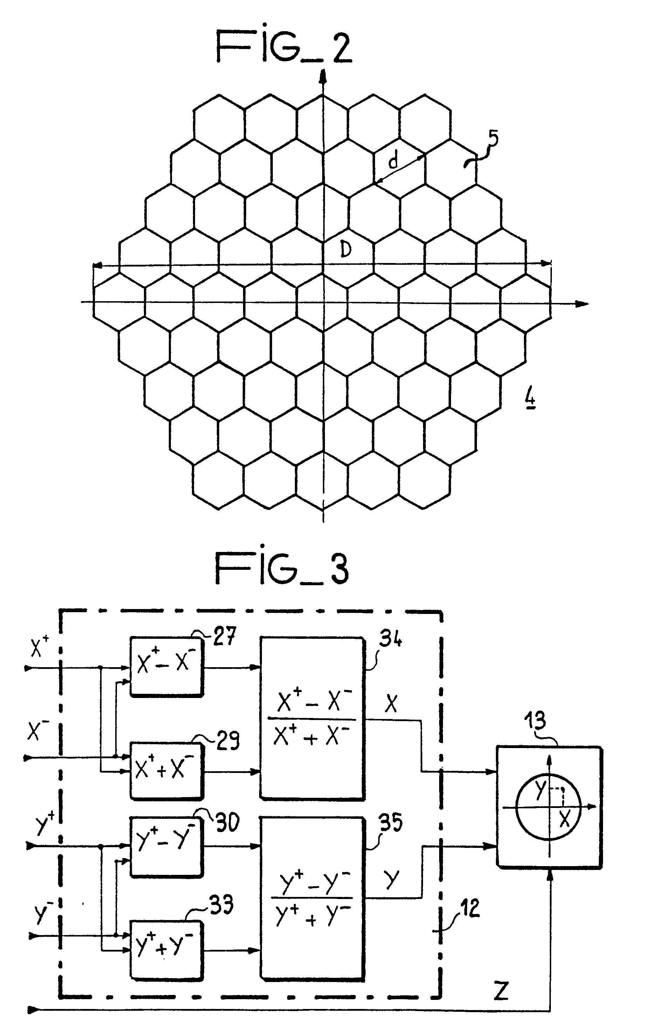

D'une manière préférée dans l'invention, les tubes photomultiplicateurs tels que 5 ont chacun une section hexagonale et sont accolés les une aux autres pour former un réseau hexagonal visible en coupe sur la figure 2. Dans un exemple, la surface développée par ce réseau à une dimension de l'ordre de 60 cm par 60 cm la médiane d de chacun des tubes étant de l'ordre de 6 cm. Le nombre des tubes du réseau est ici de 61. Les axes cartésiens de référence apparaissent sur cette figure. Chacun des tubes photomultiplicateurs tels que 5 contient un ensemble de dynodes telles que 19 (figure 1) pour amplifier les détections réalisées par ces tubes. Tous les tubes photomultiplicateurs du réseau sont réglés de telle manière qu'ils injectent une contribution c identique dans le jeu 6 de matrices quand ils reçoivent sur leur photocathode la même énergie lumineuse.

Le jeu 6 de matrices comporte cinq matrices composées chacune d'un nombre identique de résistances, ici 61 résistanccs puisqu'il y a 61 tubes. Chaque résistance d'une matrice est reliée d'un côté à la sortie d'un tube photomultiplicateur et de l'autre côté à une borne commune qui constitue la sortie de la matrice. Les résistances des matrices servant à l'élaboration des impulsions de localisation comportent en aval des éléments non linéaires symbolisés par la présence d'une diode en série avec la résistance. Dans la cinquiemèe matrice délivrant l'impulsion pondérée w représentative de l'énergie W de la scintillation toutes les résistances ont une valeur pratiquement identique et il n'y a pas d'éléments non linéaires. Après intégration dans les intégrateurs 10 de l'étage 11 d'intégrateurs, les impulsions pondérées sont transformées en impulsion de localisation X+, X-, Y+, X- et en impulsions W d'énergie respectivement.

Les moyens 9 de restauration de potentiel de base interposées entre le jeu 6 de matrice et l'étage 11 d'intégrateurs (on ne parlera plus dans la suite de cet exposé de l'ensemble 7 des amplificateurs à gain variable 8) fonctionnent de la manière suivante. Lorsqu'une impulsion pondérée correspondant à une scintillation apparaît, en particulier sur la voie d'énergie w, elle est prise en compte par un circuit 20 de repérage de l'apparition de l'impulsion. Dès le début de cette impulsion pondérée le circuit 20 émet un ordre F appliqué à un relais 21 du circuit 9. Le relais 21 est d'un type porte analogique rapide (par exemple DG 181 BA de SILICONICS). Pendant toute la durée de présence de l'ordre F qui est dite durée de restauration, le relais 21 fermé restaure un potentiel de base sur la borne 22 de la capacité 23 qui est raccordée à l'intégrateur 10. Le potentiel de base est symbolisé ici par un raccordement à la masse. Comme l'impulsion pondérée x+ est introduite dans le dispositif 9 par l'intermédiaire d'une ligne à retard 24, la transmission de l'impulsion x+ n'est pas affectée par ce forçage de potentiel. Lorsque l'ordre cesse le relais 21 s'ouvre et du fait de la constante de temps imposée par l'impédance d'entrée de l'intégrateur 10 conjuguée avec la capacité 23 le potentiel de la borne 22 reste à la valeur imposée. Puis l'impulsion qui était retardée dans la ligne à retard 24 arrive sur la capacité 23 qu'elle traverse alors naturellement pour venir s'appliquer à l'entrée de l'intégrateur 10. La durée de retard de ligne à retard 24 est bien entendu supérieure ou égale à la durée de l'ordre F de restauration. Les moyens 9 et 20 font l'objet d'une demande de brevet déposée le même jour par la demanderesse et permettent d'éliminer du signal utile des tensions continues parasites.

Le circuit 20, qui compare dans un ensemble de comparateurs 25 et 36 l'impulsion pondérée w respectivement à un seuil bas SB, et à un seuil haut SH prédéterminés, délivre l'ordre F lorsque w est comprise entre la bande d'énergie définie par ces seuils. L'ordre F est délivré par une porte ET 37 recevant sur ses entrées les sorties des comparateurs 25 et 36. L'ordre F peut alors être introduit dans un circuit logique 26 comportant essentiellement un retardateur pour actionner les intégrateurs 10 en synchronisation avec l'arrivée des impulsions pondérées. A partir de l'ordre L appliqué ainsi aux intégrateurs, une commande de validation Z est appliquée aux moyens 13 de visualisation par l'intermédiaire d'un circuit retardateur 38 pour assurer la synchronisation de cette visualisation.

Sur la figure 3, les impulsions de localisation X+, X-, Y+, Y- sont introduites deux par deux aux entrées d'un jeu de quatre additionneurs contenus dans le circuit de calcul 12. L'additionneur 27 reçoit sur une première entrée le signal X+ délivré par l'intégrateur 10. Il reçoit sur une deuxième entrée le signal X- délivré par l'intégrateur 28. Cette deuxième entrée est une entrée inversée et l'additionneur 27 délivre le signal (X+ - X-). L'additionneur 29 reçoit les mêmes signaux que l'additionneur 27 mais ne comporte pas d'entrée inversée, il délivre donc le signal (X+ + X-). L'additionneur 30 reçoit sur une première entrée le signal Y+ délivré par l'intégrateur 31 et sur une deuxième entrée le signal Y- délivré par l'intégrateur 32. La deuxième entrée de l'additionneur 30 est une entrée inversée et cet additionneur délivre le signal (Y+-Y-). L'additionneur 33 reçoit les mêmes signaux que l'additionneur 30 mais ne comporte pas d'entrée inversée, il délivre donc le signal (Y+ + Y-. Ces intégratéurs (10, 28, 31 et 32) et ces additionneurs (27, 29, 30, 33) sont d'un type connu.

Les sorties des additionneurs 27 et 29 sont reliées aux deux entrées d'un diviseur 34. Ce diviseur 34 effectue la division:

$$\frac{X^+ - X^-}{X^+ + X^-}$$

Les sorties des additionneurs 30 et 33 sont reliées aux deux entrées d'un diviseur 35. Ce diviseur 35 effectue la division:

$$\frac{Y^+ - Y^-}{Y^+ + Y^-}$$

Ces diviseurs sont des diviseurs analogiques rapides du type Analog Devices 429 B, ou Teledyne Philbrick 4457. Ils sont capables d'effectuer une division analogique à 0,1 % près en moins de deux microsecondes. Ils n'introduisent dans la gamma caméra qu'un temps mort suffisamment court pour s'adapter aux spécifications de taux de comptage désirées. Les sorties des diviseurs 34 et 35 qui constituent les sorties du circuit 12 délivrent respectivement les signaux de coordonnées X et Y.

On s'aperçoit que, de cette manière, la normalisation de X ou Y n'est obtenue qu'en utilisant les impulsions de localisation, X+ et X- ou Y+ et Y- respectivement, qui servent justement à l'élaboration de X ou Y. Ainsi, les modifications de variance ou les effcts de non linéarité qui affectent le calcul de chacun de ces signaux de coordonnées sont sans effet. A l'expérimentation, un gain en résolution spatiale supérieur à 10 % est obtenu avec le procédé de traitement des impulsions de localisation de l'invention.

Il est par ailleurs connu d'effectuer le repérage du point P sur l'écran de l'oscilloscope par repérage des tubes photomultiplicateurs selon trois axes de coordonnées. Ces trois axes non cartésiens sont centrés sur le milieu du réseau de tubes et sont orientés dans des directions faisant des angles de 120° entre elles. Dans ce cas, le jeu de matrices comporte six matrices de localisation et six impulsions de localisations, notées par exemple A+, A-, B+, B-, C+, C-, sont délivrées par six intégrateurs raccordés à ces six matrices. Le calcul des coordonnées A, B, C du point représentatif de la scintillation est identique à celui décrit par ANGER. C'est-à-dire que A est proportionnel à (A+ - A-), B à (B+ - B-), et C (C+-C-). La normalisation de A, B, C peut, selon la présente invention, être obtenue en divisant ces valeurs respectivement par (A+ + A-), (B+ + B-) et (C+ + C-). Une recomposition trigonométrique ultérieure permet de retrouver X et Y à partir de A, B et C.

## Revendications

1. Procédé de traitement des impulsions de localisation (X+, X-, Y+, Y-) délivrées par une gamma-caméra dans laquelle:
- des scintillations (s) produites sous l'effet d'un rayonnement gamma (g) dans un cristal scintillateur (3) sont détectées, amplifiées et transformées en contributions électriques (c) par un réseau (4) de tubes (5) photomultiplicateurs,
- lesdites contributions sont pondérées par un jeu (6) de matrices de résistances pour produire des impulsions pondérées (x+, x-, y+, y-) relatives à un système d'axes de référence,
- lesdites impulsions pondérées sont ensuite sommées et intégrées dans un étage (11) d'intégrateurs (10, 28, 31, 32) pour produire lesdites impulsions de localisation,
- lesdites impulsions de localisation sont transformées et normalisées par un circuit (12) de calcul en signaux électriques (X, Y) représentatifs des coordonnées cartésiennes des emplacement des scintillations sur le cristal (3),
- caractérisé en ce que l'on effectue dans le circuit (12) de calcul une normalisation (34, 35) des signaux de coordonnées en divisant la soustraction (X+ - X-) de deux impulsions de localisation selon un axe de coordonnée par la somme (X+ + X-) des mêmes impulsions selon cet axe, la même opération étant effectuée pour chaque axe de référence.

2. Gamma-caméra munie d'un dispositif de traitement des impulsions de localisation (X+, X-, Y+, Y-) comportant un collimateur (2) pour collimater sur un cristal scintillateur (3) un rayonnement gamma (g) à mesurer, un réseau (4) de tubes (5) photomultiplicateurs pour détecter les scintillations (s) émises par le scintillateur et pour amplifier les contributions électriques (c) résultant de ces détections, un jeu (6) de matrices de résistances pour pondérer les contributions électriques et produire ainsi des impulsions pondérées (x+, x-, y+, y-) relatives à un système d'axes de référence, un étage (11) d'intégrateurs (10, 28, 31, 32) pour sommer et intégrer les impulsions pondérées et produire lesdites impulsions de localisation, et un circuit (12) de calcul pour transformer les impulsions de localisation en signaux électriques (X, Y) représentatifs des coordonnées cartésiennes des emplacements des scintillations sur le cristal, caractérisé en ce que le circuit (12) de calcul comporte des moyens (27, 29, 30, 33, 34, 35) pour effectuer une normalisation des signaux de coordonnées en divisant la soustraction (X+ - X-) de deux impulsions de localisation selon un axe de référence par la somme (X+ + X-) des mêmes impulsions de localisation selon cet axe.

3. Gamma-caméra selon la revendication 2, caractérisé en ce que les moyens de normalisation comportent des additionneurs (29, 30) pour additionner les impulsions de localisation correspondant à un même axe de coordonnées.

## Patentansprüche

1. Verfahren zur Bearbeitung der Lokalisationsimpulse (X+, X-, Y+, Y-), die von einer Gammakamera geliefert werden,
- wobei Scintillationen (s), die durch die Wirkung einer Gammastrahlung (g) in einem Scintillatorkristall (3) erzeugt werden, erfaßt, verstärkt und durch ein Netz (4) von Photovervielfacherröhren (5) in elektrische Beiträge (c) umgewandelt werden,

6

- wobei diese Beiträge durch einen Satz (6) von Widerstandsmatrizen gewichtet werden, um gewichtete Impulse (x+, x-, y+, y-) bezüglich eines Bezugsachsensystems zu erzeugen,
- wobei die gewichteten Impulse dann summiert und in einer mit Integratoren (10, 28, 31, 32) versehenen Integrationsstufe (11) integriert werden, um die Lokalisationsimpulse zu erzeugen,
- wobei die Lokalisationsimpulse durch einen Rechenkreis (12) in elektrische Signale (X, Y) umgewandelt und normalisiert werden, die für die kartesischen Koordinaten der Scintillationsstellen auf dem Kristall (3) charakteristisch sind, dadurch gekennzeichnet, daß im Rechenkreis (12) eine Normalisierung (34, 35) der Koordinatensignale erfolgt, indem die Differenz (X+ - X-) zwischen zwei Lokalisationsimpulsen gemäß einer Koordinatenachse durch die Summe (X+ + X-) derselben Impulse entlang dieser Achse dividiert wird, wobei die gleiche Operation für jede Bezugsachse durchgeführt wird.

2. Gammakamera mit einer Bearbeitungsvorrichtung für Lokalisationsimpulse (X+, X-, Y+, Y-) und mit einem Kollimator (2) zum Konzentrieren einer zu messenden Gammastrahlung (g) auf einem Scintillatorskristall (3), mit einem Netz (4) von Photovervielfacherröhren (5), um die vom Scintillator ausgehenden Scintillationen (s) zu erfassen und um die elektrischen Beiträge (c), die von diesen Erfassungen stammen, zu verstärken, mit einem Satz (6) von Widerstandsmatrizen, um die elektrischen Beiträge zu gewichten und so gewichtete Impulse (x+, x-, y+, y-) bezüglich eines Bezugsachsensystems zu erzeugen, mit einer Integratoren (10, 28, 31, 32) enthaltenden Integrationsstufe (11), um die gewichteten Impulse zu summieren und zu integrieren und um die Lokalisationsimpulse zu erzeugen, und mit einem Rechenkreis (12), um die Lokalisationsimpulse in elektrische Signale (X, Y) umzuwandeln, die für die kartesischen Koordinaten den Scintillationsstellen auf dem Kristall charakteristisch sind, dadurch gekennzeichnet, daß der Rechenkreis (12) Mittel (27, 29, 30, 34, 35) enthält, um eine Normalisierung der Koordinatensignale zu erreichen, indem die Differenz (X+ - X-) von zwei Lokalisationsimpulsen gemäß einer Bezugsachse durch die Summe (X+ + X-) derselben Lokalisationsimpulse gemäß dieser Achse dividiert wird.

3. Gammakamera nach Anspruch 2, dadurch gekennzeichnet, daß die Normalisierungsmittel Addierer (29, 30) enthalten, um die Lokalisationsimpulse entsprechend einer gleichen Koordinatenachse zu addieren.

## Claims

1. A method for processing localisation pulses (X+, X-, Y+, Y-) supplied by a gamma camera
- wherein scintillations (s) produced under the effect of a gamma radiation (g) in a scintillator cristall (3) are detected, amplified and converted into electrical contributions (c) by a network (4) of photomultiplier tubes (5),
- wherein said contributions are weighted by a set (6) of resistor matrices in order to produced weighted pulses (x+, x-, y+, y-) relating to a reference system of axes,
- wherein said weighted pulses are further added and integrated in a stage (11) including integrators (10, 28, 31, 32) in order to produce said localisation pulses,
- wherein said localisation pulses are transformed and normalized by a computing circuit (12) into electrical signals (X, Y) representative of the cartesian coordinates of the scintillation places on the cristall (3),
- characterized in that in the computing circuit (12), a normalisation (34, 35) of the coordinate signal is performed by dividing the difference (X+ - X-) between two localisation pulses along one coordinate axis by the sum (X+ + X-) of these same pulses along the same axis, this same operation being performed for each reference axis.

2. A gamma camera supplied with a device for processing the localisation pulses (X+, X-, Y+, Y-), comprising a collimator (2) for concentrating a gamma radiation (g) to be measured on a scintillator cristall (3), a network (4) of photomultiplier tubes (5) for detecting the scintillations (s) emitted by the scintillator and for amplifying the electrical contributions (c) resulting from these detections, a set (6) of resistor matrices for weighting the electrical contributions and for thus producing weighted pulses (x+, x-, y+, y-) relative to a reference system of axes, a stage (11) including integrators (10, 28, 31, 32) for adding and integrating the weighted pulses and for producing said localisation pulses, and a computing circuit (12) for converting the localisation pulses into electrical signals (X, Y) representing the cartesian coordinates of the places of scintillation on the cristall, characterized in that the computing circuit (12) includes means (27, 29, 30, 33, 34, 35) for performing a normalisation of the coordinate signals by dividing the difference (X+ - X-) between two localisation pulses along one reference axis by the sum (X+ + X-) of these same localisation pulses along this axis.

3. A gamma camera according to claim 2, characterized in that the normalisation means comprise adders (29, 30) conceived to add the localisation pulses corresponding to a common coordinate axis.

FIG_1

# FiG_2

# FiG_3